# EUROPÄISCHE PATENTANMELDUNG

(11) **EP 3 202 532 A1**
(43) Veröffentlichungstag der Anmeldung: **09.08.2017**
(21) Anmeldenummer: 17154249.1
(22) Anmeldetag: 01.02.2017
(51) Int. Cl.: B23Q 1/03

(54) **GEGENHALTER ZUM STÜTZEN MINDESTENS EINES BAUTEILS BEI EINER BAUTEILBEHANDLUNG UND VERFAHREN ZUM STÜTZEN MINDESTENS EINES BAUTEILS BEI EINER BAUTEILBEHANDLUNG MIT EINEM GEGENHALTER**

(30) Priorität: 05.02.2016 DE 202016100596 U
(71) Anmelder: EDAG Production Solutions GmbH & Co. KG, 36039 Fulda (DE)
(72) Erfinder: Schaafhausen, Wilfried, 88045 Friedrichshafen (DE)
(74) Vertreter: Schuhbießer, Irmgard Gertrud

(57) **Zusammenfassung**

Es ist ein Gegenhalter (30; 300) zum Stützen mindestens eines Bauteils (4) bei einer Bauteilbehandlung und ein Verfahren zum Stützen mindestens eines Bauteils (4) bei einer Bauteilbehandlung mit einem Gegenhalter (30, 300) gezeigt. Der Gegenhalter (30; 300) hat eine Aufnahmeeinrichtung (321, 322, 323, 324) zur Aufnahme und Stützung des Bauteils (4) an einer Vielzahl von Anlageelementen (34), an welchen mindestens ein mit einer Behandlungsvorrichtung (20) zu behandelndes Bauteil (4) für die Behandlung anlegbar ist, so dass die Aufnahmeeinrichtung (321, 322, 323, 324) in Zusammenwirken mit der Vielzahl von Anlageelementen (34) zum Gegenhalten gegen eine Kontur des jeweiligen Bauteils (4) beim Durchführen der Bauteilbehandlung ausgestaltet ist, und mindestens einem Abstandselement (33; 33A) zum Einstellen der Aufnahmeeinrichtung (321, 322, 323, 324) und der Anlageelemente (34) in Bezug auf die Kontur des von der Aufnahmeeinrichtung (321, 322, 323, 324) aufzunehmenden und zu stützenden mindestens einen Bauteils (4), wobei das mindestens eine Abstandselement (33; 33A) so angepasst ist, dass die Vielzahl von Anlageelementen (34) als Gleichteil ausgestaltbar ist.

## Beschreibung

Die vorliegende Erfindung bezieht sich auf einen Gegenhalter zum Stützen mindestens eines Bauteils bei einer Bauteilbehandlung und ein Verfahren zum Stützen mindestens eines Bauteils bei einer Bauteilbehandlung mit einem Gegenhalter. Insbesondere bezieht sich die vorliegende Erfindung auf einen Gegenhalter, der bei einer Bauteilbehandlung mit einer Vorrichtung in einer Automatisierungsanlage zum Einsatz kommen kann und ein damit verbundenes Verfahren. Die Automatisierungsanlage ist insbesondere eine Fertigungsstraße für ein Fahrzeug, oder einen sonstigen Gegenstand, bei welchem das Bauteil und/oder eine Behandlungsvorrichtung des Bauteils mit Robotern gehandhabt werden/wird.

In Automatisierungsanlagen, wie Behandlungs- und/oder Produktionsanlagen oder Fertigungsstraßen für industriell gefertigte Gegenstände, insbesondere Kraftfahrzeuge, Mediengeräte, Möbel, usw., werden üblicherweise einzelne Bauteile des zu behandelnden oder zu fertigenden Gegenstands von einem Ort zum anderen bewegt und/oder das Bauteil um seine Achse geschwenkt und/oder für eine bestimmte Behandlungsweise in einer speziellen Position gehalten, usw. Hierzu wird derzeit im Stand der Technik ein Greifwerkzeug verwendet, das sowohl die Last des Gegenstands handhaben kann als auch ausreichend dimensioniert ist, um den Gegenstand sicher und ausreichend schnell von einer Ausgangsposition in eine gewünschte andere Position zu bewegen und den Gegenstand an dieser Position auch zu halten und/oder zu positionieren und/oder in definierter Anordnung bereitzustellen.

DE 20 2015 103 185 zeigt eine Vorrichtung, die einen ein- oder doppelseitigen Bauteilgreifer, der sowohl an seinen beiden Seiten Bauteile greifen kann als auch für Laserschweiß- und Rollfalzbearbeitung für Fahrzeugbauteile sowie sämtliche Kombinationen daraus geeignet ist. Somit kann die Vorrichtung ein oder zwei Behandlungsfunktionen, insbesondere Fügefunktionen, des Bauteils kombinieren, wie beispielsweise Rollfalzen an seiner einen Seite und Laserschweißen an seiner anderen Seite. Ungeachtet dessen kann die Vorrichtung jedoch auch ein oder zwei Rollfalzgreifer oder ein oder zwei Laserschweißgreifer anstelle des einen Rollfalzgreifers und des einen Laserschweißgreifers aufweisen. Durch ihre Konstruktion ist die Vorrichtung im Vergleich zu anderen Vorrichtungen dieser Art sehr leichtgewichtig. Dadurch ist die Vorrichtung sehr flexibel und ist schnell an geänderte Situationen im Fertigungsablauf anpassbar und kostengünstig herstellbar. Dadurch ist die Vorrichtung sowohl im Prototypenbau als auch in der Serienfertigung von Gegenständen auch bei sehr niedrigen Taktzeiten sehr gut geeignet. Dies ist ein großer Vorteil gegenüber anderen Vorrichtungen, bei welchem für den Prototypenbau und die Serienfertigung von Gegenständen verschiedene Vorrichtungen erforderlich sind.

Als Gegenhalter für das Bauteil, das mit der zuvor beschriebenen Vorrichtung behandelt wird, wurde derzeit bei der Anmelderin ein Falzbett/Laserbett zum Bereitstellen und Fixieren der Bauteile erprobt, das gekühlte segmentierte Falzbetten aufweist. Hierbei können die gekühlten segmentierten Falzbettflächen teilweise höhenverstellbar und neigungsverstellbar gelagert sein, um einen Bauteilverzug durch die Behandlung des Bauteils beim Falzen oder Lasern mit der beschriebenen Vorrichtung auszugleichen oder fixierend entgegenzuwirken. Durch diese Verstellbarkeit entstehen jedoch Versatzkanten zwischen den Falzbettflächen. Dies führt dazu, dass die Bauteilgleichheit und Wiederholgenauigkeit des Fertigungsprozesses für die Produktion von Serienfahrzeugen nicht zufriedenstellend erzielt und gelöst werden kann.

Ein weiteres Problem besteht darin, dass bei der Montage von Fahrzeugen in einer Fahrzeugfertigungslinie möglichst viele verschiedene Typen eines Fahrzeugmodells, wie beispielsweise Kombi, Limousine, Cabrio, usw., je nach Bedarf direkt nacheinander und abwechselnd herstellbar sein sollen. Hierfür sind für die verschiedenen Typen des Fahrzeugmodells zum einen unterschiedliche Teile, wie Dächer, Fahrertüren, Beifahrertüren, Hecktüren usw. und zum anderen unterschiedliche Bearbeitungsarten der Teile, wie Bördeln bzw. Rollfalzbearbeitung, Laserschweißen usw. erforderlich. Demzufolge muss an einer Station zur Montage der Fahrzeugdächer oder Fahrzeugtüren, wenn erst eine Limousine, dann ein Cabrio und direkt danach wieder eine Limousine des Fahrzeugmodells hergestellt werden soll, jeweils die Vorrichtung und/oder der Gegenhalter für die unterschiedlichen Bauteile der einzelnen Fahrzeugmodelle umgerüstet werden. Dies erzwingt unter anderem eine Vorhaltung von verschiedenen Gegenhaltern und eine dafür jeweils benötigte Umrüstzeit. Nachteilig daran ist, dass dadurch der Platzbedarf und die Taktzeiten der Fahrzeugfertigungslinie ansteigen.

Daher ist es Aufgabe der vorliegenden Erfindung, einen Gegenhalter zum Stützen mindestens eines Bauteils bei einer Bauteilbehandlung und ein Verfahren zum Stützen mindestens eines Bauteils bei einer Bauteilbehandlung mit einem Gegenhalter bereitzustellen, mit welchen die zuvor genannten Probleme gelöst werden können. Insbesondere sollen ein Gegenhalter zum Stützen mindestens eines Bauteils bei einer Bauteilbehandlung und ein Verfahren zum Stützen mindestens eines Bauteils bei einer Bauteilbehandlung mit einem Gegenhalter bereitgestellt werden, bei welchen der Gegenhalter im Vergleich zu herkömmlichen Gegenhaltern sehr flexibel und schnell an geänderte Situationen im Fertigungsablauf anpassbar sowie kostengünstig herstellbar und betreibbar ist.

Diese Aufgabe wird durch einen Gegenhalter zum Stützen mindestens eines Bauteils für eine Bauteilbehandlung nach Anspruch 1 gelöst.

Bei dem Gegenhalter entstehen keine Versatzkanten, an denen das Bauteil anliegt. Stattdessen kann das mindestens eine Bauteil an der Vorrichtung positioniert aufgenommen werden, so dass die geforderte Bauteilgleichheit und Wiederholgenauigkeit des Fertigungsprozesses für die Produktion von Serienfahrzeugen erzielt und gelöst werden kann. Der Begriff "positioniertes Aufnehmen" im Sinne dieser Beschreibung ist als positionieren und/oder in definierter Anordnung bereitstellen zu verstehen.

Der beschriebene Gegenhalter realisiert eine sehr einfache und flexibel an die jeweiligen Gegebenheiten anpassbare Lösung. Dadurch kann mit dem beschriebenen Gegenhalter eine Referenzgeometrie des Bauteils als Standard sehr gut eingemessen, definiert und justiert werden. Hierbei ist außerdem eine Rückwärtskonstruktion vom Bauteil zum Gegenhalter als Werkzeug möglich. Dadurch werden Bauteilabänderungen leichter möglich und Fahrzeugvarianten sind besser integrierbar. Infolgedessen ist auch ein Typenwechsel, wie beispielsweise von Kombi zu Limousine usw. mit dem Gegenhalter möglich. Insbesondere ist auch ein Wechsel einzelner Werkzeugsektionen und anderer Baugruppen an dem Gegenhalter möglich.

Zudem ist mit dem beschriebenen Gegenhalter der in der Beschreibungseinleitung beschriebene Gegenhalter vereinfacht, so dass eine wirtschaftlich sehr günstige Lösung bereitgestellt wird. Hierzu trägt auch bei, dass der Gegenhalter keine aktive Kühlung mit entsprechenden Kühlkanälen benötigt, um Hitzenester am Bauteil und einen Bauteilverzug zu verhindern.

Der Gegenhalter ist für eine Verwendung sowohl im Prototypenbau als auch in der Serienfertigung von Gegenständen auch bei sehr niedrigen Taktzeiten sehr gut geeignet. Dies ist ein großer Vorteil gegenüber dem Stand der Technik, bei welchem für den Prototypenbau und die Serienfertigung von Gegenständen verschiedene Gegenhalter erforderlich sind.

Vorteilhafte weitere Ausgestaltungen des Gegenhalters sind in den abhängigen Ansprüchen angegeben.

Der zuvor beschriebene Gegenhalter kann Teil einer Automatisierungsanlage zur Behandlung eines Gegenstands sein, wobei die Automatisierungsanlage zudem mindestens eine Behandlungseinrichtung zum Behandeln eines von dem Gegenhalter gestützten Bauteils für den Gegenstand aufweist.

"Behandeln" ist hierbei insbesondere zu verstehen als greifen; ansaugen; halten, insbesondere niederhalten; umsetzen; an einer bestimmten Stelle positionieren; bewegen, wie schwenken, drehen, schieben, heben, usw.; tragen, stützen, usw.; oder bearbeiten mit einem Werkzeug.

Die zuvor genannte Aufgabe wird zudem durch ein Verfahren zum Stützen mindestens eines Bauteils bei einer Bauteilbehandlung mit einem Gegenhalter nach Anspruch 14 gelöst.

Vorteilhafte weitere Ausgestaltungen des Verfahrens sind in den abhängigen Ansprüchen angegeben.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 eine stark vereinfachte dreidimensionale Ansicht einer Automatisierungsanlage mit einem Gegenhalter gemäß einem ersten Ausführungsbeispiel;
Fig. 2 eine dreidimensionale Ansicht des Gegenhalters gemäß dem ersten Ausführungsbeispiel;
Fig. 3 und Fig. 4 jeweils eine dreidimensionale Ansicht des Gegenhalters gemäß dem ersten Ausführungsbeispiel, wobei der Gegenhalter ein Bauteil stützt; und
Fig. 5 und Fig. 6 jeweils eine dreidimensionale Ansicht eines Gegenhalters gemäß einem zweiten Ausführungsbeispiel.

In den Figuren sind gleiche oder funktionsgleiche Elemente, sofern nichts anderes angegeben ist, mit denselben Bezugszeichen versehen.

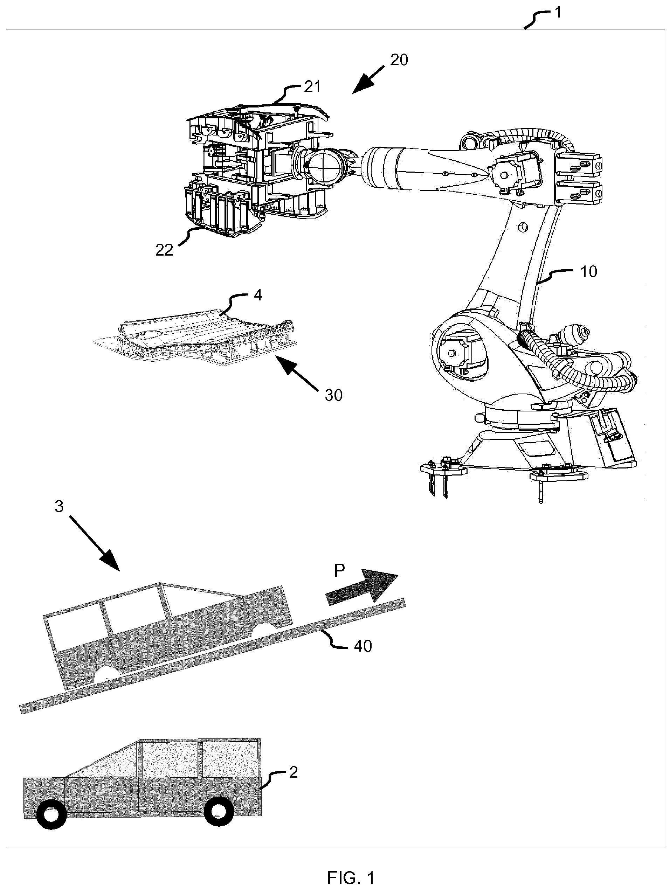

Fig. 1 zeigt eine Automatisierungsanlage 1 zur Produktion oder Fertigung eines Gegenstands 2 aus einem Teilgegenstand 3, der aus mehreren Bauteilen 4 zusammengebaut ist, von denen in Fig. 1 nur eines sehr schematisch dargestellt ist. In Fig. 1 ist der Gegenstand 2 ein Kraftfahrzeug und die Automatisierungsanlage 1 ist eine Fahrzeugfertigungslinie, in welcher Fahrzeuge aus Fahrzeuggrundkörpern als der Teilgegenstand 3 hergestellt werden bzw. zunächst die Fahrzeuggrundkörper 3 der Fahrzeuge als Gegenstand 2 aus einzelnen Bauteilen 4, wie Seitenteilen, Türinnenteil, Türaußenteil, Fügeverbund aus Türinnen- und Türaußenteil, Dach, Türen, Deckel, Klappen von Fahrzeugen, insbesondere Frontklappe, Heckklappe, usw., also insbesondere ein Karosserieteil für ein Fahrzeug, gefertigt bzw. hergestellt werden. Die Automatisierungsanlage 1 ist jedoch nicht darauf beschränkt und kann eine Automatisierungsanlage für einen beliebigen anderen industriell gefertigten Gegenstand 2, wie Möbel, usw., sein. Insbesondere kann das Fahrzeug auch ein Lastkraftfahrzeug, Flugzeug, Schiff usw. sein. Jedoch kann das Bauteil 4 auch ein Bauteil für weiße Ware, wie insbesondere einen Elektro- oder Gasofen oder eine Backofenröhre, ein Kühlschrank- oder Waschmaschinengehäuse, usw., sein.

Die Automatisierungsanlage 1 in Fig. 1 hat mindestens eine Bewegungsvorrichtung 10, eine Vorrichtung 20, einen Gegenhalter 30 und eine Transportvorrichtung 40. An der Vorrichtung 20 sind in Richtung ihrer ersten Seite eine erste Behandlungseinrichtung 21 und in Richtung ihrer zweiten Seite eine zweite Behandlungseinrichtung 22 montiert. Die Bewegungsvorrichtung 10 dient zum Bewegen der Vorrichtung 20, mit welcher eines oder mehrere der Bauteile 4 und/oder Teilgegenstände 3 in Zusammenwirken mit dem Gegenhalter 30 behandelt werden. Alternativ dazu kann die Bewegungsvorrichtung 10 jedoch auch den Gegenhalter 30 bewegen, auch wenn dies in Fig. 1 nicht gezeigt ist. Der Gegenhalter 30 hält das Bauteil 4 und hält gegen eine Druckkraft der Vorrichtung 20, wenn das Bauteil 4 mit der ersten oder zweiten Behandlungseinrichtung 21, 22 behandelt wird. Der Gegenhalter 30 ist nachfolgend noch genauer in Bezug auf die anderen Figuren beschrieben.

In Fig. 1 ist die Bewegungsvorrichtung 10 ein Roboter. Alternativ dazu kann die Bewegungsvorrichtung 10 jedoch auch eine beliebige andere Form und Ausgestaltung haben, wie beispielsweise ein Schwenkarm, eine Hebevorrichtung mit einem Teleskoparm usw.

Die Transportvorrichtung 40 transportiert die Fahrzeuggrundkörper als die Teilgegenstände 3 oder auch nur einzelne Bauteile 4 in Richtung des Pfeils P durch die Automatisierungsanlage 1. Die Transportvorrichtung 30 ist in Fig. 1 nur sehr vereinfacht und nur teilweise dargestellt.

In Fig. 1 ist die Vorrichtung 20 derart mit der Bewegungsvorrichtung 10 gehalten, dass die erste Behandlungseinrichtung 21 unten an der Vorrichtung 20 angeordnet ist, wohingegen die zweite Behandlungseinrichtung 22 oben an der Vorrichtung 20 angeordnet ist. In einer derartigen in Fig. 1 gezeigten Position der Vorrichtung 20 kann die Vorrichtung 20 bei der vorliegenden Automatisierungsanlage 1 ein Bauteil 4 mit ihrer ersten Behandlungseinrichtung 21 behandeln. Um bei der vorliegenden Automatisierungsanlage 1 ein Bauteil 4 auch mit der zweiten Behandlungseinrichtung 22 behandeln zu können, kann die Bewegungsvorrichtung 10 die Vorrichtung 20 in eine Stellung drehen, bei welcher die erste Behandlungseinrichtung 21 unten an der Vorrichtung 20 angeordnet ist und die zweite Behandlungseinrichtung 22 oben an der Vorrichtung 20 angeordnet.

Auch wenn dies in den Figuren nicht dargestellt ist, kann die Bewegungsvorrichtung 10 die Vorrichtung 20 selbstverständlich auch in alle anderen jeweils erforderlichen Positionen bzw. Stellungen drehen, bei welchen die Vorrichtung 20 eine Behandlung eines Bauteils 4 ausführen soll. Je nach Ausgestaltung der Automatisierungsanlage 1 kann die Bewegungsvorrichtung 10 die Vorrichtung 20 auch derart positionieren, dass zumindest teilweise gleichzeitig eine Behandlung von Bauteil(en) 4 mit den beiden Behandlungseinrichtungen 21, 22 möglich ist.

Somit können bei der zuvor beschriebenen Vorrichtung 20 zwei Behandlungseinrichtungen 21, 22, wie Werkzeuge, an unterschiedlichen Seiten der Vorrichtung 20 vorgesehen sein. Je nach Bedarf kann die Bewegungsvorrichtung 10 die Vorrichtung 20 so drehen, dass die derzeit benötigte erste oder zweite Behandlungseinrichtung 21, 22 dem Bauteil 4 zugewandt ist, so dass eine Bearbeitung des Bauteils 4 mit der ersten oder zweiten Behandlungseinrichtung 21, 22 möglich ist.

Die erste Behandlungseinrichtung 21 in Fig. 1 ist als Füllschieber ausgestaltet, welcher zum Bördeln bzw. zur Rollfalzbearbeitung zum Einsatz kommen kann. Dagegen ist die zweite Behandlungseinrichtung 22 als Niederhalter ausgestaltet, welche beim Schweißen, wie Laserschweißen oder einem anderen geeigneten verzugsarmen Schweißverfahren, wie beispielsweise Widerstandspressschweißen, Punktschweißen, usw. zum Einsatz kommen kann. Hierbei können insbesondere kombinierte Schweißbrenner mit einer WIG/MAG-Stromquelle für Stahl oder WIG/MIG-Stromquelle für Aluminium, usw. verwendet werden. Die zweite Behandlungseinrichtung 22 kann ein oder mehrere Bauteil(e) 4 auf dem Gegenhalter 30 als Unterlage niederhalten, so dass mindestens ein Bauteil 4 mittels Laserschweißen bearbeitet werden kann. Hierbei kann das Bauteil 4 optional noch von einem nicht dargestellten Bauteilgreifer gegriffen sein. Die zweite Behandlungseinrichtung 22 dient also zum Behandeln eines oder mehrerer Bauteil(e) 4.

Insbesondere besteht das Bauteil 4 aus mehreren Segmenten oder Einzelteilen, die in einem ersten Arbeitsschritt mit dem Gegenhalter 30 als Unterkonstruktion in Position gebracht und bereitgestellt werden. In einem zweiten Arbeitsschritt wird bei der Automatisierungsanlage 1 von Fig. 1 von der Bewegungsvorrichtung 10 mit der Vorrichtung 20 das zweite Bauteil 4, beispielsweise das Innenbauteil einer Tür, das an der Vorrichtung 20 gehalten wird, aufgelegt und mit der Behandlungseinrichtung 22 zusammen mit dem bereits an dem Gegenhalter 30 angelegten Bauteil 4 an dem Gegenhalter 30 niedergehalten und gefügt, insbesondere verschweißt. Dadurch werden mindestens zwei Bauteile 4, miteinander gefügt, insbesondere verschweißt. Dadurch ergeben sich zwei Arbeitsschritte bei der Behandlung mit der Automatisierungsanlage von Fig. 1.

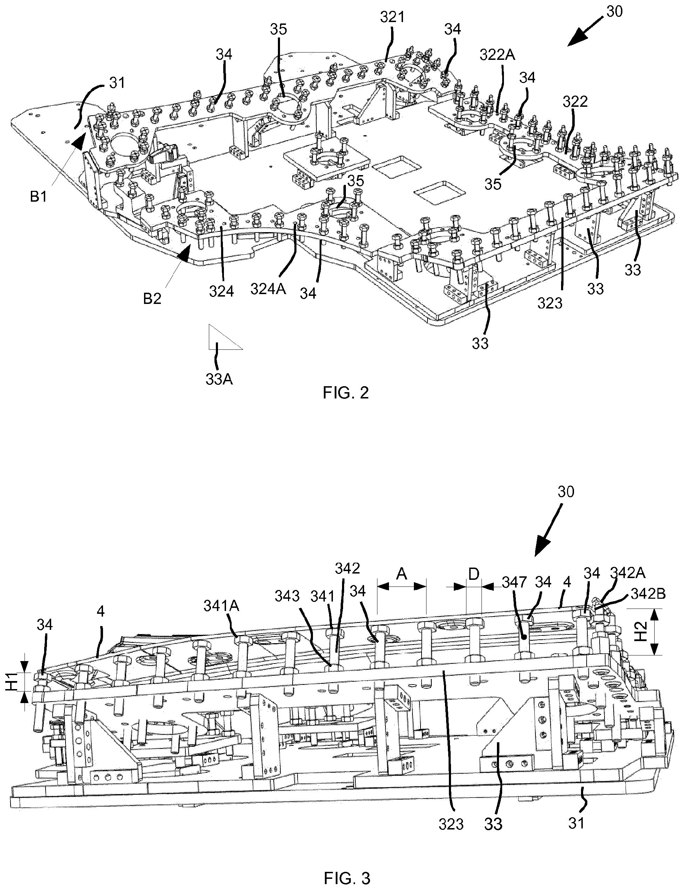

In Fig. 2 ist das Bauteil 4 von Fig. 1 nicht an dem Gegenhalter 30 angeordnet, so dass der Gegenhalter 30 genauer sichtbar ist. Gemäß Fig. 2 hat der Gegenhalter 30 einen Basiskörper 31, eine erste Teil-Aufnahmefläche 321, eine zweite Teil-Aufnahmefläche 322, eine dritte Teil-Aufnahmefläche 323 und eine vierte Teil-Aufnahmefläche 324, eine Vielzahl von Abstandselementen 33 und eine Vielzahl von Anlageelementen 34, die an den Teil-Aufnahmeflächen 321 bis 324 auch um Öffnungen 35 herum angeordnet sind. Optional hat der Gegenhalter 30 auch mindestens ein Abstandselement 33A. Der Übersichtlichkeit halber sind in Fig. 2 nicht alle Abstandselemente 33, Anlageelemente 34 und Öffnungen 35 mit einem Bezugszeichen versehen. Optional sind unter anderem in der zweiten und vierten Teil-Aufnahmefläche 322, 324 Öffnungen 322A, 324A vorgehalten, in welche bei Bedarf weitere Anlageelemente 34 einsetzbar sind. Der Übersichtlichkeit halber sind in Fig. 2 nicht alle Öffnungen 322A, 324A mit einem Bezugszeichen versehen.

Insbesondere die Anlageelemente 34 an den Öffnungen 35 verhindern, dass sich in dem Bauteil 4 durch Krafteinwirkung beim Behandeln mit der Vorrichtung 20 Spannungen ergeben, die dazu führen, dass das Material des Bauteils 4 so verbogen wird, dass das Bauteil 4 plötzlich von dem bisherigen stabilen Zustand in einen metastabilen Zustand umspringt, wobei ein Knackgeräusch entsteht. Dieses Phänomen ist auch als Schnappscheibe oder Knackfrosch bekannt.

Bei dem Gegenhalter 30 bilden die erste bis vierte Teil-Aufnahmefläche 321 bis 324 zusammen eine Aufnahmeeinrichtung 321, 322, 323, 324 für das Bauteil 4. Die einzelnen Teil-Aufnahmeflächen 321 bis 324 sind plattenförmig ausgebildet. Die einzelnen Teil-Aufnahmeflächen 321 bis 324 können in den Abmessungen eine beliebige Form haben. Außerdem ist der Basiskörper 31 plattenförmig ausgebildet. Auch der Basiskörper 31 kann in den Abmessungen eine beliebige Form haben. Die Aufnahmeeinrichtung 321, 322, 323, 324 bildet bei der Form von Fig. 2 einen Rahmen, der entlang der Außenkontur des Basiskörpers 31 angeordnet ist.

In Fig. 2 ist die Aufnahmeeinrichtung 321, 322, 323, 324 mit ihrer Unterseite beabstandet durch die Vielzahl von Abstandselementen 33 an dem Basiskörper 31 angeordnet. Die Abstandselemente 33 lagern die Aufnahmeeinrichtung 321, 322, 323, 324 in der Höhe verstellbar an dem Basiskörper 31. Hierbei kann der Neigungswinkel der einzelnen Teil-Aufnahmeflächen 321 bis 324 zu dem Basiskörper 31 beliebig eingestellt werden. Bei dem vorliegenden Ausführungsbeispiel sind die Abstandselemente 33 fixe Abstandselemente. In Fig. 2 sind die erste Teil-Aufnahmefläche 321 und die dritte Teil-Aufnahmefläche 323 als Beispiel um einen Winkel von ca. 30 bis 45° zum Basiskörper 31 geneigt. Dagegen sind die zweite und vierte Teil-Aufnahmefläche 322, 324 als Beispiel in etwa parallel zum Basiskörper 31 angeordnet. Das Abstandselement 33 kann optional auch eine lineare verstellbare Fixierverbindung aufweisen, die z.B. durch Langloch-Klemmverbindung ausgeführt ist. In diesem Fall kann die Verstellung des Abstandselements 33 insbesondere stufenlos erfolgen.

Das optional vorhandene mindestens eine Abstandselement 33A ist bei Bedarf zwischen der Aufnahmeeinrichtung 321, 322, 323, 324 und der Vielzahl von Anlageelementen 34 montierbar.

Auch das mindestens eine Abstandselement 33A ist verstellbar ausgestaltet. Dadurch kann der Abstand zwischen der Aufnahmeeinrichtung 321, 322, 323, 324 und der Vielzahl von Anlageelementen 34 entweder allein oder zusätzlich zu einer Eistellung mit den Abstandselementen 33 so eingestellt werden, dass die Vielzahl von Anlageelementen 34 an die Kontur des Bauteils 4 anpassbar ist. Dadurch kann erreicht werden, dass alle Anlageelemente 34 gleich ausgestaltet werden können.

Noch dazu ist bei dem Gegenhalter 30 von Fig. 2 an einer Oberseite der einzelnen Teil-Aufnahmeflächen 321 bis 324 die Vielzahl von Anlageelementen 34 an der Aufnahmeeinrichtung 321, 322, 323, 324 derart angeordnet, dass das Bauteil 4 an die Anlageelemente 34 angelegt, insbesondere aufgelegt werden kann. In Fig. 2 sind alle Anlageelemente 34 als Schraube oder Stift ausgestaltet. Hierbei sind alle Anlageelemente 34 gleich ausgestaltet. Dies ist in Bezug auf die Fertigung und Wartung des Gegenhalters 30 von Vorteil, da möglichst viele Gleichteile verwendbar sind und dadurch die Vorhaltung von verschiedenen Teilen für den Gegenhalter 30 reduziert werden kann. Jedoch können auch verschiedenartig geformte Anlageelemente 34 eingesetzt werden, wenn dies für den jeweiligen Zweck gefordert ist.

Ein Teil der Anlageelemente 34 ist in Fig. 2 entlang einem äußeren Rand der Anlagefläche 323 aufgereiht, in anderen Worten in einer Reihe angeordnet. Die Reihe der Vielzahl von Anlageelemente 34 ist im Wesentlichen parallel zu dem äußeren Rand der Anlagefläche 323 angeordnet. Wie bereits erwähnt, ist ein anderer Teil der Anlageelemente 34 jeweils um eine Öffnung 35 gruppiert. Die um eine Öffnung 35 gruppierten Anlageelemente 34 bilden einen Ring um die Öffnung 35. Die Anlageelemente 34 sind speziell im Umfangs- und Fügebereich des Gegenhalters 30 zur sicheren und genauen Stützung des Bauteils 4 angeordnet, um dadurch positionsneutral durch den Energieeintrag bei der Bauteilbehandlung, wie beispielsweise beim Laserschweißen, usw., in das Bauteil 4 kompensierend entgegenzuwirken. Je nach Bedarf können die Anlageelemente 34 so nebeneinander angeordnet sein, dass nur ein geringer Abstand zwischen den Anlageelementen 34 vorgesehen ist, wie in Fig. 2 in dem Bereich, der mit dem Pfeil B1 markiert ist. Außerdem können die Anlageelemente 34 direkt nebeneinander angeordnet sein, so dass praktisch kein Abstand zwischen den Anlageelementen 34 vorgesehen ist, wie in Fig. 2 in dem Bereich, der mit dem Pfeil B2 markiert ist. Je nach Anwendungsfall sind auch andere Abstände möglich.

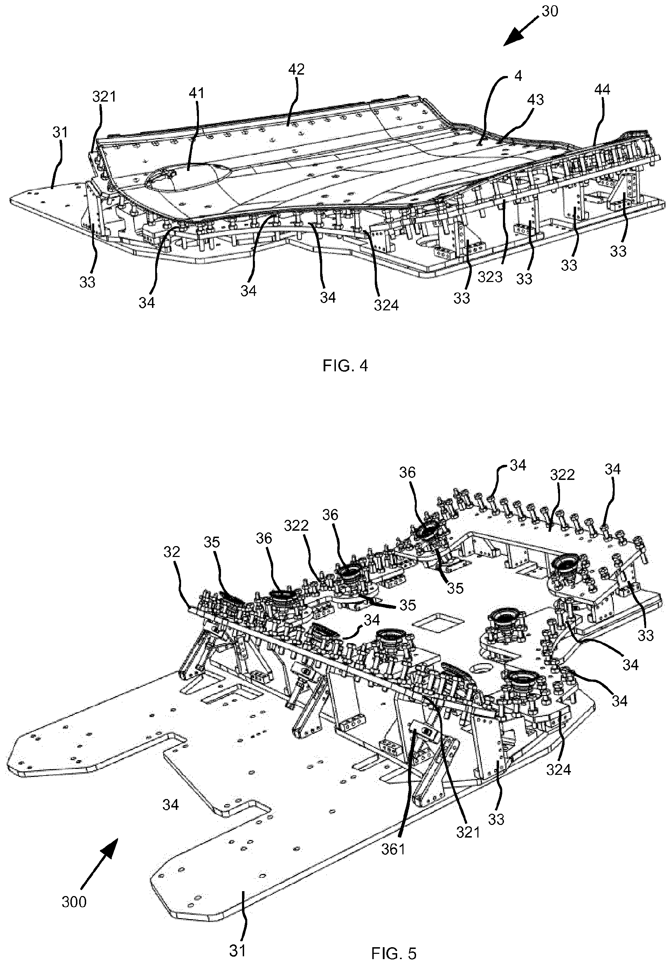

Die Anlageelemente 34 in Fig. 2 sind auf verschiedene Längen oder Höhen H1, H2 eingestellt, wie in Fig. 3 dargestellt. Hier sind als Beispiel nur die zwei verschiedenen Höhen H1 und H2 für die beiden äußeren Anlageelemente 34 angegeben. Jedoch sind auch andere Höhen für die Anlageelemente 34 möglich, wie in Fig. 3 auf der linken Seite dargestellt. Dadurch sind die Anlageelemente 34 an die verschiedenen Niveaus einer Kontur des Bauteils 4 anpassbar, die in Fig. 4 gezeigt ist, wie später beschrieben. Durch den Gegenhalter 30 ist ein Fixieren bzw. Aufspannen des mindestens einen Bauteils 4 in Soll-Position möglich. Dadurch können kleinere Bauteiltoleranzen, wie Verzug des Bauteils 4 ausgeglichen werden. Nach dem Fügen, wie beispielsweise Lasern, ist das Bauteil 4 gefestigt und versteift. Hierbei ist anzumerken, dass in den Figuren das Bauteil 4 als Beispiel nur in seiner Außenkontur gezeigt ist. Bei der Bauteilbehandlung wird ein in den Figuren nicht dargestelltes Türinnenteil auf das Bauteil 4 gelegt, in Position gehalten und dann gelasert, um die fertige Fahrzeugtür herzustellen.

Fig. 3 stellt den Gegenhalter 30 in einer Seitenansicht von der Teil-Aufnahmefläche 323 aus gesehen genauer dar. Demzufolge hat jedes Anlageelement 34 von Fig. 2 bis Fig. 4 einen Kopf 341, einen Stab 342 und einen Fuß 343, der als Konterschraube ausgebildet sein kann. Der Stab 342 kann als Gewindestab ausgeführt sein, an welchem der Kopf 341 und der Fuß 343 aufgeschraubt sind. Eine Verriegelung des Anlageelements 34 in dem Fall einer Schraubfixierung erfolgt durch den als Konterschraube ausgebildeten Fuß 343. Dadurch wird das Anlageelement 34 linear in seiner Höhe H1, H2 fixiert.

Der Kopf 341 hat eine größere Querschnittsfläche als der Stab 342. Der Fuß 343 hat wiederum in etwa die gleiche Querschnittsfläche wie der Kopf 341. Oben am Kopf 341 ist jeweils eine Anlagefläche 341A vorgesehen, an welcher das mindestens eine Bauteil 4 anlegbar ist. Der Kopf 341 wird an dem Stab 342 vorzugsweise derart montiert, dass er eine stufenlose Anlagefläche 341A für das Bauteil 4 bildet. Somit ist die Anlagefläche 341A als ebene Fläche ausgebildet. Dagegen kann der Stab 342 durch Eindrehen oder Verschieben in dem Fuß 343 nach unten durch die Aufnahmeeinrichtung 321, 322, 323, 324 in seiner Höhe H1, H2 verstellt werden. Bei Bedarf kann der Stab 342 jedoch auch oben durch den Kopf 341 geschraubt oder geschoben werden, so dass das Bauteil 4 an einem Ende des Stabs an einer Anlagefläche 342A des Stabs 342 anliegen kann. In diesem Fall kann der Stab 342 außerdem mit einer zweiten Anlagefläche 342B als seitlicher Anschlag für das Bauteil 4 dienen, wie für die Anlageelemente 34 auf der rechten Seite von Fig. 3 dargestellt. Das Anlageelement 34 kann also wahlweise so eingestellt werden, dass entweder die Anlagefläche 341A oder zumindest eine der beiden Anlageflächen 342A, 342B als Anlagefläche für das Bauteil 4 nutzbar sind.

Beispielsweise ist das Anlageelement 34 als Hutmutter oder Andrückschraube oder Positionierschraube ausgebildet. Hierbei können die Anlageflächen 342A, 342B insbesondere als kugelförmige gerundete Anlagefläche in Form der Hutmutter, Andrückschraube oder Positionierschraube ausgebildet sein. Möglich ist hierbei eine minimale Anlage- bzw. Auflagefläche.

In Fig. 3 ist die Breite D der Anlagefläche 341A kleiner als ein Abstand A zwischen zwei nebeneinander angeordneten Anlageelementen 34. Dadurch sind jeweils zwei Anlageelemente 34 um einen größeren Abstand A voneinander beabstandet als die Breite D der Anlagefläche 341A des jeweiligen Anlageelements 34 bemessen ist. Beispielsweise gilt A = 2 * D, wie in etwa in Fig. 2 bis Fig. 4 gezeigt. Für die Anlageelemente 34 von Fig. 2 in dem Bereich, der mit dem Pfeil B2 markiert ist, gilt jedoch ca. A = D. In dem Bereich, der mit dem Pfeil B1 markiert ist, ist der Abstand A jedoch nur etwas größer als D, beispielsweise gilt A = 1,2 * D. Wie bereits erwähnt, sind je nach Bedarf auch andere Abstände möglich.

Somit dient der Kopf 341 in Fig. 3 als Anlagefläche 341A für das Bauteil 4 an dem Gegenhalter 30. Die Anlagefläche 341A ist im Hinblick auf die Größenverhältnisse von Anlagefläche 341A zu Bauteil 4 eine punktförmige Anlagefläche für das Bauteil 4. Das Bauteil 4 wird somit von den Anlageelementen 34 punktuell gestützt. Dagegen ist das Anlageelement 34 mit seinem Fuß 343 an der Aufnahmefläche 323 angeordnet oder abgestützt. Die Anlageelemente 34 sind in Fig. 3 als Passstift ausgebildet. Sehr vorteilhaft ist, wenn das als Passstift ausgebildete Anlageelement 34 als Verstellstift ausgebildet ist, der in seiner Länge oder Höhe verstellbar, insbesondere stufenlos verstellbar, ist. In diesem Fall kann das Anlageelement 34 optimal an die jeweils vorhandene Kontur des Bauteils 4 angepasst werden.

Optional sind die Anlageelemente 34 mit einem Verriegelungselement 347 zur Verriegelung des Anlageelements 34 gegen eine Verstellung ausgestattet. Das Verriegelungselement 347 ist in Fig. 3 ein Stift oder Haken, der in eine Öffnung an dem Stab 342 des zugehörigen Anlageelements 34 einrastet.

Wie aus Fig. 4 ersichtlich, ist das Bauteil 4 bei diesem Ausführungsbeispiel eine Fahrzeugtür, insbesondere dessen hintere Tür, für beispielsweise eine Limousine. Das Bauteil 4 hat eine spezielle Kontur mit einer Ausbuchtung 41 für eine Türgriffschale , einen Fensterschachtanschluss 42 sowie einen gebogenen Rand 43 und einen unteren Schweller 44. Das Bauteil 4 ist sowohl an seinem Fensterschachtanschluss 42 als auch an seinem unteren Schweller 44 nach oben in Fig. 2 gebogen. Hierfür ist der Gegenhalter 30 entsprechend ausgebildet, um die in Fig. 4 dargestellte und zuvor beschriebene Kontur des Bauteils 4 nachzubilden. Die hintere Tür als Bauteil 4 liegt in Fig. 4 mit ihrer äußeren Sichtfläche auf den Anlageelementen 34 bzw. deren Anlageflächen 341 auf.

Zwischen den Abstandselementen 33 und zwischen den Anlageelementen 34 des Gegenhalters 30 kann die Umgebungsluft frei zirkulieren. Insbesondere sind die Anlageelemente 34 durch ihre Geometrie derart ausgestaltet, dass die Umgebungsluft auch zwischen den Anlageelementen 34 zirkulieren kann, wenn die Anlageelemente 34 ohne Abstand zwischen den Anlageflächen 341 direkt nebeneinander montiert sind, wie in Fig. 2 in dem mit dem Pfeil B2 bezeichneten Bereich veranschaulicht. Dies ist zur Hinterlüftung des Bauteils 4 und der Anlagefläche 341 insbesondere beim Laserschweißen vorteilhaft, bei welchem die beim Schweißen entstehende Hitze durch den beschriebenen Aufbau des Gegenhalters 30 schnell und einfach ohne zusätzliche aktive Entlüftungsmaßnahme abgeführt werden kann. Die Geometrie der Anlageelementen 34 bietet demzufolge eine freie Hinterlüftung. Dadurch kann ein Verzug des Bauteils 4 vermieden werden, so dass die geforderten Maß- und Fertigungstoleranzen eingehalten werden können.

Somit ist der Gegenhalter 30 so aufgebaut, dass eine Vielzahl von Auflage-Flächenpunkten an den Anlageflächen 341A mit Bauteilkontakt vorhanden ist. Zudem ist durch die gewählte Spaltabmessung zwischen den Auflageflächen ein Ausgleich der Versatzkanten möglich bzw. keine Versatzkanten vorhanden.

Mit dem Gegenhalter 30 kann das Bauteil 4 für eine Bauteilbehandlung bereitgestellt und vorzugsweise auch fixiert werden. Damit kann die geforderte Bauteilgleichheit und Wiederholgenauigkeit des Fertigungsprozesses für die Produktion von Serienfahrzeugen erzielt und gelöst werden.

Infolgedessen kann bei der Bauteilbehandlung insbesondere eine Fügefunktion für das Bauteil 4 durchgeführt werden, wie beispielsweise Laserschweißen, usw. Bei dem Gegenhalter 30 ist die Aufnahmeeinrichtung 321, 322, 323, 324 in Zusammenwirken mit der Vielzahl von Anlageelementen 34 zum Gegenhalten gegen eine Kontur des Bauteils 4 beim Durchführen der Bauteilbehandlung ausgestaltet. Hierfür wird vorzugsweise die zweite Behandlungseinrichtung 22 der Vorrichtung 20 von Fig. 1 bei einem Schweißen, wie beispielsweise Laserschweißen, usw. verwendet, wie zuvor beschrieben. Der zuvor beschriebene Gegenhalter 30 kann vorteilhaft beispielsweise auch verwendet werden, wenn bei der standardmäßigen Fertigung von beispielsweise Fahrzeugtüren das Innenteil und Außenteil gefügt, insbesondere gefalzt werden. Hier wird häufig auch in dem Fügebereich mit Klebstoff gearbeitet, welcher die gefügten Bauteile 4 aneinander fixieren soll. Der Klebstoff wird durch Erwärmen auf eine Temperatur um ca. 170 -180 Grad ausgehärtet oder aktiviert. Der Gegenhalter 30 kann hierbei die Bauteile 4 in Position halten, wie beschrieben, und nach dem Fügen zusammen mit den gefügten Bauteilen 4 in die Aushärtestation zum Aushärten des Klebstoffes überführt werden. Dadurch ermöglicht der Gegenhalter 30 eine besonders zeitsparende Fertigung der Tür als Gegenstand 2 aus den Bauteilen 4, da vermieden wird, dass die Bauteile 4 in der Aushärtestation erneut aufgespannt werden müssen. Außerdem können dadurch relative Bewegungen der Bauteile 4 relativ zueinander, also zwischen Innen- und Außenteil der Tür, bei der Entnahme vermieden werden. Dies trägt zur Erhöhung der Maßgenauigkeit bei. Dadurch sind die geforderten Maßtoleranzen besser einhaltbar und die Gleichheit der gefertigten Teilgegenstände 3 und damit auch der Gegenstände 2 steigt.

In einer Modifikation des vorliegenden Ausführungsbeispiels sind die Anlageelemente 34 nicht als Verstellstift sondern als Klemmstift ausgebildet. In diesem Fall liegt das Bauteil 4 nicht nur an den Anlageelementen 34 an, sondern der Klemmstift als Anlageelement 34 fixiert das Bauteil 4 auch an dem Gegenhalter 30.

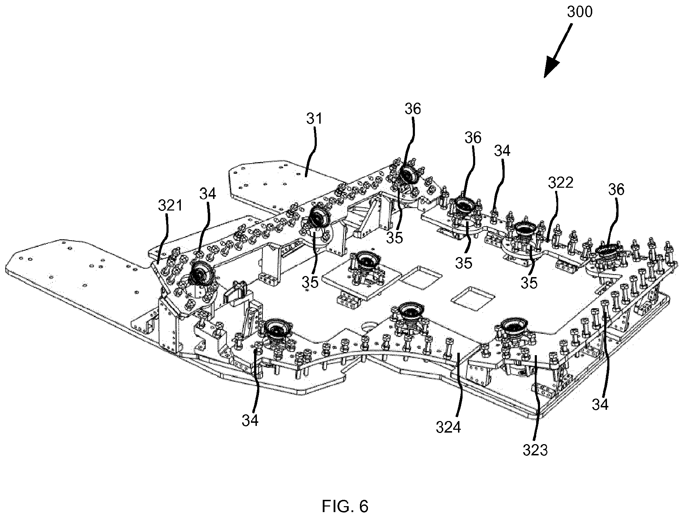

Fig. 5 und Fig. 6 zeigen einen Gegenhalter 300 gemäß einem zweiten Ausführungsbeispiel. Der Gegenhalter 300 gemäß dem vorliegenden Ausführungsbeispiel ist in weiten Teilen auf die gleiche Weise ausgeführt, wie der Gegenhalter 30 gemäß dem vorangehenden Ausführungsbeispiel.

Im Unterschied zu dem Gegenhalter 30 gemäß dem vorangehenden Ausführungsbeispiel hat der Gegenhalter 300 gemäß dem vorliegenden Ausführungsbeispiel zusätzlich mehrere Halteeinrichtungen 36, die in den Öffnungen 35 angeordnet sind. Dadurch ist jeder Halteeinrichtung 36 die Gruppe von Anlageelementen 34 zugeordnet, welche um die Halteeinrichtung 36 herum und beabstandet voneinander angeordnet sind, wie in Bezug auf das vorangehende Ausführungsbeispiel beschrieben. Die Halteeinrichtung 36 ist mit einem Stellelement 361 vorzugsweise stufenlos in die gewünschte Position stellbar In anderen Worten, mit dem Stellelement 361 kann die Halteeinrichtung 36 ausgerichtet werden. Hierbei dient das Stellelement 361 dazu, die Halteeinrichtung 36 in ihrer Neigung zum Basiskörper 31 oder zur Aufnahmeeinrichtung 321, 322, 323, 324 oder in Linear-Richtung, also auf das Bauteil 4 zu oder von dem Bauteil 4 weg zu verstellen.

In Fig. 5 sind die Teil- Aufnahmeflächen 321 bis 324 durch die Abstandselemente 33, die als angeschrägte Passstücke ausgestaltet sind, fest miteinander verbunden. Optional ist jedoch eine flexible Verstellung der Abstandselemente 33 zum Einstellen der Teil- Aufnahmeflächen 321 bis 324 beispielsweise per Langloch mit darin eingreifendem Führungsstift an den Abstandselementen 33 möglich.

Die Halteeinrichtungen 36 dienen zum Halten des Bauteils 4 an dem Gegenhalter 30. In Fig. 5 und Fig. 6 sind die Halteeinrichtungen 36 als Vakuumsauger ausgeführt, welche ein Bauteil 4 durch einen Unterdruck ansaugen und dadurch fest halten. Dadurch kann mindestens ein Bauteil 4 an dem Gegenhalter 30 auch dann sicher gehalten werden, wenn der Gegenhalter 30 nicht horizontal, wie in Fig. 5 und Fig. 6 dargestellt angeordnet ist, sondern aus der horizontalen Stellung zumindest teilweise in die vertikale Stellung oder über Kopf geneigt wird.

Ansonsten ist der Gegenhalter 300 auf die gleiche Weise aufgebaut, wie in Bezug auf den Gegenhalter 30 beim ersten Ausführungsbeispiel beschrieben.

Alle zuvor beschriebenen Ausgestaltungen der Automatisierungsanlage 1, der Vorrichtung 20 und der Gegenhalter 30, 300 können einzeln oder in allen möglichen Kombinationen Verwendung finden. Insbesondere ist eine beliebige Kombination oder Austausch der Merkmale der Ausführungsbeispiele möglich. Bei Bedarf können Merkmale der Ausführungsbeispiele auch entfallen, soweit die beschriebenen Funktionen gewährleistet sind. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Form des Gegenhalters 30, 300 ist beliebig wählbar, solange dessen zuvor beschriebene Funktion gewährleistet ist.

An der Vorrichtung 20 können auch andere Behandlungseinrichtungen als die erste und zweite Behandlungseinrichtung 21, 22 montiert sein. Insbesondere können auch zwei Behandlungseinrichtungen 22 zur Verwendung beim Laserschweißen montiert sein.

Die Anlageelemente 34 müssen nicht alle gleich ausgestaltet sein. Insbesondere können die Anlageelemente 34 unterschiedlich dicke Stäbe 342 haben. Es ist auch möglich, dass zumindest eines der Anlageelemente 34 unverstellbar oder fix ist, wenn sichergestellt ist, dass in dem Bereich des fixen Anlageelements 34 immer eine spezielle Höhe benötigt wird oder die Höhe allein durch ein oder mehrere Abstandselement(e) 33 oder eine Verstellung der Abstandselemente 33 realisierbar ist.

Die Halteeinrichtungen 36 müssen nicht in den Öffnungen 35 angeordnet sein. Stattdessen kann zumindest eine der Halteeinrichtungen 36 wie die Anlageelemente 34 auch direkt auf der zugehörigen Teil-Aufnahmefläche 321 bis 324 angeordnet sein. In diesem Fall ist es möglich, dass die Anlageelemente 34 höher als dargestellt sind, so dass die Halteelemente 36 zum Aufbringen der erforderlichen Haltekraft entsprechend dimensioniert werden können.

Anstelle oder zusätzlich zu den Halteeinrichtungen 36 ist es auch möglich, die Anlageflächen 341A von zumindest einem Teil der Anlageelemente 34 als Halteeinrichtung zu magnetisieren, so dass das Bauteil 4 durch Magnetkraft fixiert und gehalten wird. Je nach Ausführung der Anlageelemente 34 und deren Anlageflächen 341A und dem jeweiligen Anwendungsfall ist es auch möglich, das nur Anlageelemente 34 an dessen Anlageflächen 341A magnetisiert ist. Vorzugsweise ist die Magnetkraft abschaltbar, so dass das Bauteil 4 ohne Wirkung der Magnetkraft in die gewünschte Position gebracht werden kann.

## Patentansprüche

1. Gegenhalter (30; 300) zum Stützen mindestens eines Bauteils (4) bei einer Bauteilbehandlung, mit
einer Aufnahmeeinrichtung (321, 322, 323, 324) zur Aufnahme und Stützung des Bauteils (4) an einer Vielzahl von Anlageelementen (34), an welchen mindestens ein mit einer Behandlungsvorrichtung (20) zu behandelndes Bauteil (4) für die Behandlung anlegbar ist, so dass die Aufnahmeeinrichtung (321, 322, 323, 324) in Zusammenwirken mit der Vielzahl von Anlageelementen (34) zum Gegenhalten gegen eine Kontur des jeweiligen Bauteils (4) beim Durchführen der Bauteilbehandlung ausgestaltet ist, und
mindestens einem Abstandselement (33; 33A) zum Einstellen der Aufnahmeeinrichtung (321, 322, 323, 324) und der Anlageelemente (34) in Bezug auf die Kontur des von der Aufnahmeeinrichtung (321, 322, 323, 324) aufzunehmenden und zu stützenden mindestens einen Bauteils (4),
wobei das mindestens eine Abstandselement (33; 33A) so angepasst ist, dass die Vielzahl von Anlageelementen (34) als Gleichteil ausgestaltbar ist.

2. Gegenhalter (30; 300) nach Anspruch 1, wobei mindestens ein Anlageelement (34) der Vielzahl von Anlageelementen (34) mindestens zwei in Größe oder Anordnung verschiedene Anlageflächen (341A, 342A, 342B) aufweist, die an dem Anlageelement (34) wahlweise einstellbar sind.

3. Gegenhalter (30; 300) nach Anspruch 1 oder 2, wobei mindestens zwei Anlageelemente (34) derart ausgestaltet und angeordnet sind, dass eine Anlagefläche (341A) des einen der Anlageelemente (34) um einen größeren Abstand (A) von der Anlagefläche (341A) des anderen der zwei Anlageelemente (34) beabstandet ist als eine Breite (D) einer Anlagefläche (341A) des jeweiligen Anlageelements (34) bemessen ist.

4. Gegenhalter (30; 300) nach einem der vorangehenden Ansprüche, zudem mit einem Basiskörper (31),
wobei die Aufnahmeeinrichtung (321, 322, 323, 324) beabstandet an dem Basiskörper (31) gelagert ist, und/oder
wobei die Aufnahmeeinrichtung (321, 322, 323, 324) zumindest teilweise in der Höhe und/oder Neigung in Bezug zu dem Basiskörper (31) verstellbar ist, und/oder
wobei die Aufnahmeeinrichtung mindestens zwei Teil-Aufnahmeflächen (321, 322, 323, 324) hat, die unabhängig voneinander in der Höhe und/oder Neigung in Bezug zu dem Basiskörper (31) verstellbar sind.

5. Gegenhalter (30; 300) nach einem der vorangehenden Ansprüche,
zudem mit einer Vielzahl von Abstandselementen (33), die zwischen dem Basiskörper (31) und der Aufnahmeeinrichtung (321, 322, 323, 324) montiert ist, wobei mindestens ein Teil der Abstandselemente (33) verstellbar ist, so dass der Abstand zwischen dem Basiskörper (31) und der Aufnahmeeinrichtung (321, 322, 323, 324) so einstellbar ist, dass die Vielzahl von Anlageelementen (34) an die Kontur des Bauteils (4) anpassbar ist,
zudem mit mindestens einem Abstandselement (33A), das zwischen der Aufnahmeeinrichtung (321, 322, 323, 324) und der Vielzahl von Anlageelementen (34) montiert ist, wobei das mindestens eine Abstandselement (33A) verstellbar ist, so dass der Abstand zwischen der Aufnahmeeinrichtung (321, 322, 323, 324) und der Vielzahl von Anlageelementen (34) so einstellbar ist, dass die Vielzahl von Anlageelementen (34) an die Kontur des Bauteils (4) anpassbar ist, und/oder
wobei mindestens ein Teil der Vielzahl von Anlageelemente (34) zur Anpassung an eine Kontur des Bauteils (4) flexibel verstellbar ist.

6. Gegenhalter (30; 300) nach einem der vorangehenden Ansprüche,
wobei mindestens ein Teil der Vielzahl von Anlageelementen (34) in einer Reihe entlang einem Rand der Aufnahmeeinrichtung (321, 322, 323, 324) aufgereiht angeordnet ist, und/oder
wobei mindestens ein Teil der Vielzahl von Anlageelemente (34) im Bereich der Mitte der Aufnahmeeinrichtung (321, 322, 323, 324) angeordnet ist.

7. Gegenhalter (30; 300) nach einem der vorangehenden Ansprüche,
wobei mindestens ein Anlageelement (34) als Verstellstift und/oder Klemmstift ausgebildet ist, und/oder
wobei mindestens ein Anlageelement (34) in seiner Höhe (H1; H2) stufenlos verstellbar ist, und/oder
wobei mindestens ein Anlageelement (34) ein Verriegelungselement zur Verriegelung des Anlageelements (34) gegen eine Verstellung aufweist, und/oder
wobei mindestens ein Anlageelement (34) als Stift mit einem Kopf (341) ausgebildet ist, und wobei der Kopf (341) als Anlagefläche (341A) dient, die eine größere Querschnittsfläche als ein Stab (342) des Anlageelements (34) aufweist,
wobei mindestens ein Anlageelement (34) durch seine Geometrie zur freien Hinterlüftung der Anlagefläche (341) ausgestaltet ist.

8. Gegenhalter (30; 300) nach einem der vorangehenden Ansprüche, wobei an der Aufnahmeeinrichtung (321, 322, 323, 324) zudem mindestens eine Halteeinrichtung (36) zum Halten des Bauteils (4) an dem Gegenhalter (30; 300) vorgesehen ist.

9. Gegenhalter (30; 300) nach Anspruch 8,
wobei die Halteeinrichtung (36) ein Vakuumsauger und/oder eine magnetisierte Anlagefläche eines Anlagelements (34) und/oder mindestens ein Klemmstift ist, und/oder
wobei mindestens einer Halteeinrichtung (36) eine Gruppe von Anlageelementen (34) zugeordnet ist, welche um die Halteeinrichtung (36) herum und beabstandet voneinander angeordnet sind.

10. Automatisierungsanlage (1) zur Behandlung eines Gegenstands (2), mit
mindestens einem Gegenhalter (30; 300) nach einem der vorangehenden Ansprüche, und
mindestens einer Behandlungseinrichtung (22) zum Behandeln eines von dem Gegenhalter (30; 300) gestützten Bauteils (4) für den Gegenstand (2).

11. Automatisierungsanlage (1) nach Anspruch 10,
wobei die mindestens eine Behandlungseinrichtung (22) zum Laserschweißen oder Widerstandspressschweißen ausgestaltet ist oder als kombinierter Schweißbrenner mit einer WIG/MAG-Stromquelle für Stahl oder einer WIG/MIG-Stromquelle für Aluminium ausgebildet ist, und/oder
wobei die mindestens eine Behandlungseinrichtung (22) zum Punktschweißen ausgestaltet ist, und/oder
wobei mindestens eine Behandlungseinrichtung (22) an einer Bewegungsvorrichtung (10) montiert ist, die zur Bewegung der Behandlungseinrichtung (22) im Raum ausgestaltet ist,

12. Automatisierungsanlage (1) nach Anspruch 10 oder 11,
wobei der Gegenhalter (30; 300) an einer Bewegungsvorrichtung (10) montiert ist, die zur Bewegung des Gegenhalters (30; 300) im Raum ausgestaltet ist, und/oder
wobei das Bauteil (4) ein Karosserieteil für ein Fahrzeug oder für weiße Ware ist.

13. Automatisierungsanlage (1) nach einem der Ansprüche 9 bis 11,
wobei der Gegenhalter (30; 300) zum in Position Bringen und Bereitstellen von mindestens einem Einzelteil des Bauteils (4) ausgestaltet ist, und
wobei die Bewegungsvorrichtung (10) zum Niederhalten der Behandlungseinrichtung (22) zusammen mit einem weiteren Bauteil (4) an dem mindestens einen Einzelteil an dem Gegenhalter (30; 300) ausgestaltet ist, um die Bauteile (4) aneinander zu fügen.

14. Verfahren zum Stützen mindestens eines Bauteils (4) bei einer Bauteilbehandlung mit einem Gegenhalter (30; 300), der eine Aufnahmeeinrichtung (321, 322, 323, 324) und mindestens ein Abstandselement (33; 33A) aufweist, wobei das Verfahren die Schritte aufweist
Aufnahme und Stützung des Bauteils (4), mit der Aufnahmeeinrichtung (321, 322, 323, 324), an einer Vielzahl von Anlageelementen (34), an welchen mindestens ein mit einer Behandlungsvorrichtung (20) zu behandelndes Bauteil (4) für die Behandlung anlegbar ist, so dass die Aufnahmeeinrichtung (321, 322, 323, 324) in Zusammenwirken mit der Vielzahl von Anlageelementen (34) gegen eine Kontur des jeweiligen Bauteils (4) beim Durchführen der Bauteilbehandlung gegenhält, und
Einstellen, mit mindestens einem Abstandselement (33; 33A), der Aufnahmeeinrichtung (321, 322, 323, 324) und der Anlageelemente (34) in Bezug auf die Kontur des von der Aufnahmeeinrichtung (321, 322, 323, 324) aufzunehmenden und zu stützenden mindestens einen Bauteils (4),
wobei das mindestens eine Abstandselement (33; 33A) so angepasst ist, dass die Vielzahl von Anlageelementen (34) als Gleichteil ausgestaltet ist.

15. Verfahren nach Anspruch 14,
wobei in einem ersten Arbeitsschritt ein mehrere Segmente oder Einzelteile aufweisendes erstes Bauteil (4) mit dem Gegenhalter (30; 300) als Unterkonstruktion in Position gebracht und bereitgestellt wird, und
wobei in einem zweiten Arbeitsschritt mit einer Bewegungsvorrichtung (10) ein zweites Bauteil (4) aufgelegt und mit einer Behandlungseinrichtung (22) der Behandlungsvorrichtung (20) zusammen mit dem bereits an dem Gegenhalter (30; 300) angelegten ersten Bauteil (4) an dem Gegenhalter 30 niedergehalten und gefügt wird.
